# EUROPÄISCHE PATENTSCHRIFT

(11) **EP 0 882 076 B1**
(45) Veröffentlichungstag und Bekanntmachung des Hinweises auf die Patenterteilung: **25.04.2001**
(21) Anmeldenummer: 97903319.8
(22) Anmeldetag: 19.02.1997
(51) Int. Cl.: C08F 10/00, C08F 4/60

(54) **GETRÄGERTE KATALYSATORSYSTEME**
SUPPORTED CATALYST SYSTEM
SYSTEMES DE CATALYSEURS A SUPPORTS

(30) Priorität: 20.02.1996 DE 19606167
(43) Veröffentlichungstag der Anmeldung: 09.12.1998
(73) Patentinhaber: BASF AKTIENGESELLSCHAFT, 67056 Ludwigshafen (DE)
(72) Erfinder: LYNCH, John, D-67590 Monsheim (DE); FISCHER, David, D-67161 Gönnheim (DE); GÖRTZ, Hans-Helmut, D-67251 Freinsheim (DE); SCHWEIER, Günther, D-67159 Friedelsheim (DE)
(86) Internationale Anmeldenummer: EP9700769
(87) Internationale Veröffentlichungsnummer: WO9731038

(56) Entgegenhaltungen:
- EP-A- 0 500 944
- EP-A- 0 589 638
- EP-A- 0 628 574
- WO-A-95/15815

## Beschreibung

Die vorliegende Erfindung betrifft geträgerte Katalysatorsysteme, erhältlich durch
A) Umsetzung eines anorganischen Trägermaterials, welches ein feinteiliger Feststoffist, dessen Teilchen durchmesser im Bereich von 1 bis 200 µm liegen, mit einer Metallverbindung der allgemeinen Formel I

   M¹(R¹)ᵣ(R²)ₛ(R³)ₜ(R⁴)ᵤ I

   in der
   - M¹: ein Alkali-, ein Erdalkalimetall oder ein Metall der III. oder IV. Hauptgruppe des Periodensystems bedeutet,
   - R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R² bis R⁴: Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
   - r: eine ganze Zahl von 1 bis 4
   und
   - s, t und u: ganze Zahlen von 0 bis 3 bedeuten, wobei die Summe r+s+t+u der Wertigkeit von M¹ entspricht,
B) Umsetzung des nach A) erhaltenen Materials mit dem Umsetzungsprodukt aus mindestens einem Metallocenkomplex in seiner Metalldihalogenid-Form und einer metalloceniumionenbildenden Verbindung
   und
C) anschließender Umsetzung mit einer Metallverbindung der allgemeinen Formel II

   M²(R⁵)ₒ(R⁶)ₚ(R⁷)_{q} II

   in der
   - M²: ein Alkali-, ein Erdalkalimetall oder ein Metall der III. Hauptgruppe des Periodensystems bedeutet,
   - R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
   - o: eine ganze Zahl von 1 bis 3
   und
   - p und q: ganze Zahlen von 0 bis 2 bedeuten, wobei die Summe o+p+q der Wertigkeit von M² entspricht.

Weiterhin betrifft die vorliegende Erfindung Verfahren zur Herstellung derartiger geträgerter Katalysatorsysteme und deren Verwendung zur Herstellung von Polyolefinen.

Homogene Metallocen-Katalysatoren haben in den letzten Jahren wohldefinierte Poly-1-olefine mit enger Molekulargewichtsverteilung und hoher chemischer Einheitlichkeit zugänglich gemacht. Eine industrielle Nutzung erfordert jedoch eine Heterogenisierung dieser Katalysatoren, so daß eine einfache Handhabbarkeit des Katalysators und eine effektive Morphologiekontrolle des Produktes gewährleistet sind. Geträgerte Metallocen-Katalysatoren sind an sich bekannt. So beschreibt die EP-A 323 716 solche Systeme, bei denen feuchtes SiO₂ mit einem Aluminiumtrialkyl umgesetzt wird, so daß ein aluminoxanbeladener Träger entsteht. Auf diesen Träger wird das Metallocen aufgebracht, wobei ein aktiver Katalysator entsteht.

Aus der WO 91/09882 ist die Herstellung eines geträgerten, kationischen Metallocen-Katalysators durch Aufbringen der Reaktionsmischung eines Dialkylmetallocens mit einer ionischen Verbindung, die als Kation eine Brönsted-Säure und als Anion ein nichtkoordinierendes Gegenion wie Tetrakis(pentafluorphenyl)borat besitzt, auf einen anorganischen Träger bekannt. Auch hierbei wird ein aktiver Katalysator erhalten.

Ähnliche geträgerte Katalysatorsysteme sind auch aus der WO 94/03506 und der WO 95/14044 bekannt.

In der EP-A 628 574 sind geträgerte Katalysatorsysteme beschrieben, bei denen ein Metallocendihalogenid in Anwesenheit eines Boronats mit einem Aluminiumalkyl umgesetzt und diese polymerisationsaktive Lösung auf einen Träger aufgebracht wird.

Die EP-A-0 628 574 beschreibt somit ein geträgertes Katalysatorsystem für die Polymerisation von Olefinen aus einer Metallocenverbindung, einer ionisierenden ionischen Verbindung, einer organometallischen Verbindung und einem anorganischen Oxid, wobei das anorganische Oxid teilweise oder vollständig durch Halogenatome substituierte Oxid- oder Hydroxylgruppen hat. Im Beispiel 1 wird eine feste Katalysatorkomponente durch Umsetzung von mit Fluorid behandeltem Alumina mit einer Mischung aus Ethylen-bis(indenyl)zirkoniumdichlorid, (PhNMe₂H)B(C₆F₅)₄ und Triethylaluminium in Toluol hergestellt.

Solche schon aktive Katalysatoren führen leicht zu Problemen bei der Dosierung des Katalysators in den Reaktor.

Vorteilhaft ist daher ein noch inaktiver Katalysator, der erst zu einem späteren Zeitpunkt, beispielsweise bei der Dosierung oder auch erst im Reaktor, aktiviert werden kann.

Aus der EP-A 613 908 sind geträgerte Metallocenkatalysatorsysteme bekannt, die teilweise erst im Reaktor aktiviert werden. Hierbei weisen jedoch die entstehenden Polymerisate eine breite Molekulargewichtsverteilung M_{w}/Mₙ auf.

Die WO 95/15815 beschreibt Katalysatoren, die durch Trägerung eines Metallocendichlorids und eines Borats auf einem vernetzten Polymer erhalten werden. Die Verwendung von desaktivierten anorganischen Trägern liefert Katalysatoren, die nach der Aktivierung im Polymerisationsreaktor entweder nur eine geringe oder gar keine Aktivität mehr aufweisen.

In der WO 95/15815 wird in Beispiel 1 eine metalloceniumionenbildende chemische Verbindung mit einer Mischung aus einem Träger und einem Metallocen (In₂ZrCl₂) umgesetzt. Die metalloceniumionenbildende Verbindung wird zu der trockenen Mischung von desaktiviertem Träger und Metallocenchlorid zugefügt. In den Beispielen der WO 95/15815 (vgl. Tabelle 1 und 2) sind die anorganischen Träger hinsichtlich Produktivität und Aktivität nachteilig im Vergleich zu organischen Trägern.

Die EP-A-0 589 638 beschreibt eine pulverförmige Katalysatorzusammensetzung aus feinen Teilchen einer Komponente (B), welche mit einer Komponente (A) beschichtet wird und ein Verfahren zur Polymerisation von Olefinen unter Verwendung dieser Katalysatorzusammensetzung. Die Komponente (B), welche eine Lösung oder eine Dispersion in einem Kohlenwasserstoff einer Subkomponente (i), welches eine Verbindung eines Übergangsmetalls der Gruppe IVB und einer Subkomponente (ii), welches ein Alumoxan, eine Lewissäure, oder eine ionische Verbindung ist, welche die Subkomponente (i) in ein Kation überführen kann, wird mit der Komponente (A), welche eine feinteilige anorganische Verbindung (hauptsächlich ein anorganisches Oxid) mit einem durchschnittlichen Teilchendurchmesser von 0.003 bis 1 µm ist, in einem Gewichtsverhältnis von (A) zu (B) von 5:95 bis 50:50 beschichtet.

Die EP-A-0 500 944 beschreibt ein Verfahren zur Polymerisation eines α-Olefins, bei dem ein Katalysator verwendet wird, der durch Reaktion einer halogenierten Metallocenverbindung mit einer organometallischen Verbindung und anschließende Kontaktierung des erhaltenen Reaktionsproduktes mit einer Verbindung, welche durch die Reaktion mit dem Reaktionsprodukt aus der halogenierten Metallocenverbindung und der organometallischen Verbindung ein stabiles Anion bildet, erhalten wird. Die halogenierte Verbindung wird zunächst mit einem Alkylierungsreagens umgesetzt und das dabei erhaltene Reaktionsprodukt dann zusammen mit der metalloceniumionenbildenden Verbindung auf einen Träger gegeben. Im Beispiel 10 wird lsopropyl(cyclopentadienyl-1-fluorenyl)zirkonium dichlorid zunächst mit Triethylaluminium in Toluol umgesetzt und das Reaktionsprodukt zusammen mit Triphenylcarbeniumtetrakis(pentafluorphenyl)borat als metalloceniumionenbildender Verbindung auf den MgCl₂-Träger gegeben.

Aufgabe der vorliegenden Erfindung war es daher, geträgerte Katalysatorsysteme zur Verfügung zu stellen, die die genannten Nachteile nicht aufweisen, die insbesondere zu einem beliebigen Zeitpunkt aktivierbar sind, die luft- und feuchtigkeitsunempfindlich sind, die lange gelagert werden können, die nicht brennbar sind und wobei die entstehenden Polymere eine enge Molekulargewichtsverteilung aufweisen.

Demgemäß wurden die eingangs definierten geträgerten Katalysatorsysteme gefunden.

Weiterhin wurden Verfahren zur Herstellung derartiger geträgerter Katalysatorsysteme gefunden und deren Verwendung zur Herstellung von Polyolefinen.

Die erfindungsgemäßen geträgerten Katalysatorsysteme sind dadurch erhältlich, daß in einer ersten Stufe A) ein anorganisches Trägermaterial mit einer Metallverbindung der allgemeinen Formel I umgesetzt wird.

Als Trägermaterialien werden feinteilige Feststoffe eingesetzt, deren Teilchendurchmesser im Bereich von 1 bis 200 µm liegen, insbesondere 30 bis 70 µm.

Geeignete. Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Andere anorganische Verbindungen wie Al₂O₃ oder MgCl₂ oder diese Verbindungen enthaltende Mischungen können ebenfalls als Trägermaterialien eingesetzt werden.

Von den Metallverbindungen der allgemeinen Formel I sind diejenigen bevorzugt, bei denen M¹ für ein Metall der III. Hauptgruppe des Periodensystems steht, insbesondere für Aluminium, R¹ für C₁-bis C₁₀-Alkyl und R² bis R⁴ für C₁- bis C₁₀-Alkyl. Für den besonders bevorzugten Fall, daß M¹ für Aluminium steht, ist u Null und die Reste R¹ bis R³ weisen insbesondere die gleiche Bedeutung auf, vorzugsweise Methyl, Ethyl, iso-Butyl oder Hexyl, bevorzugt iso-Butyl.

Vorzugsweise wird die Metallverbindung der allgemeinen Formel I als Lösung zu einer Suspension des Trägers gegeben. Als Lösungs-bzw. Suspensionsmittel sind insbesondere Kohlenwasserstoffe wie Heptan geeignet. Die Menge an Metallverbindung I kann in weiten Grenzen variieren, die Mindestmenge richtet sich nach der Anzahl der Hydroxygruppen des Trägers. Die Temperaturen, Reaktionszeiten und Drücke sind an sich unkritisch, bevorzugt sind Temperaturen von 0 bis 80°C und Reaktionszeiten von 0,1 bis 48 Stunden.

Es hat sich als geeignet erwiesen, nach der Trägervorbehandlung die überschüssige Metallverbindung I durch Auswaschen, beispielsweise mit Kohlenwasserstoffen wie Pentan oder Hexan, zu entfernen und den Träger zu trocknen.

Das so hergestellte Material ist bis zu 6 Monaten lagerbar und nicht pyrophor.

Dieses Material wird nun in einer weiteren Stufe B) mit einem Metallocenkomplex in seiner Metalldihalogenid-Form und einer metalloceniumionenbildenden Verbindung umgesetzt.

Als Metallocenkomplexe eignen sich beispielsweise folgende Verbindungen der allgemeinen Formel III: 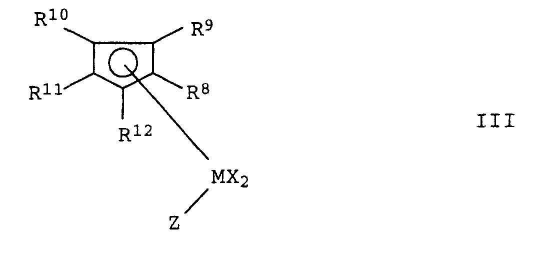 in der die Substituenten folgende Bedeutung haben:
- M: Titan, Zirkonium, Hafnium, Vanadium, Niob oder Tantal,
- X: Fluor, Chlor, Brom oder Iod,
- R⁸ bis R¹²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können oder Si(R¹³)₃ mit
- R¹³: C₁- bis C₁₀-Alkyl, C₃- bis C₁₀-Cycloalkyl oder C₆- bis C₁₅-Aryl,
- Z: für X oder 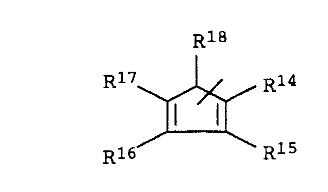 steht,
wobei die Reste
- R¹⁴ bis R¹⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
- R¹⁹: C₁- bis C₁₀-Alkyl, C₆- bis C₁₅-Aryl oder C₃- bis C₁₀-Cycloalkyl,
oder wobei die Reste R¹¹ und Z gemeinsam eine Gruppierung -R²⁰-A-bilden, in der
- R²⁰: 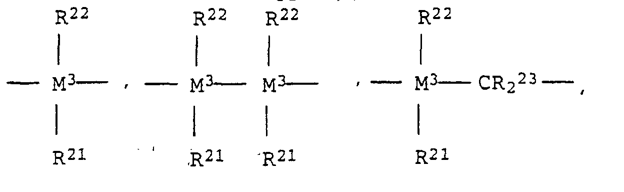 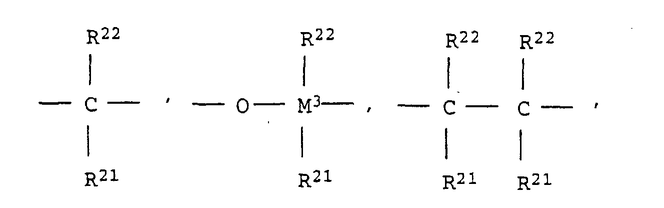 = BR²², = AlR²², -Ge-, -Sn-, -O-, -S-, = SO, = SO₂, = NR²², = CO, = PR²² oder = P(O)R²² ist,
- wobei R²¹, R²² und R²³: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M³: Silicium, Germanium oder Zinn ist,
- A: ―O―, ―S―, 〉NR²⁴ oder 〉PR²⁴ bedeutet, mit
- R²⁴: C₁- bis C₁₀-Alkyl, C₆- bis C₁₅-Aryl, C₃- bis C₁₀-Cycloalkyl, Alkylaryl oder Si (R²⁵)₃,
- R²⁵: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R¹¹ und R¹⁷ gemeinsam eine Gruppierung -R²⁰-bilden.

Von den Metallocenkomplexen der allgemeinen Formel III sind 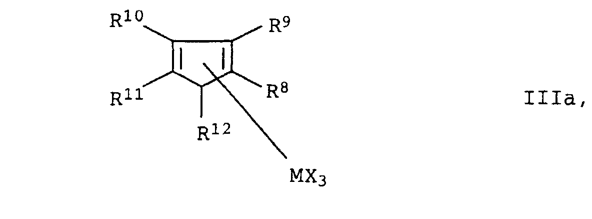 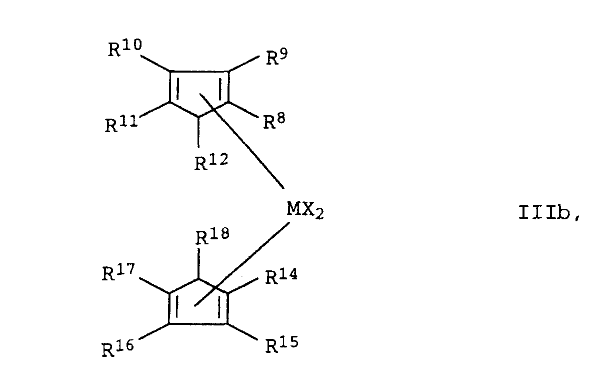 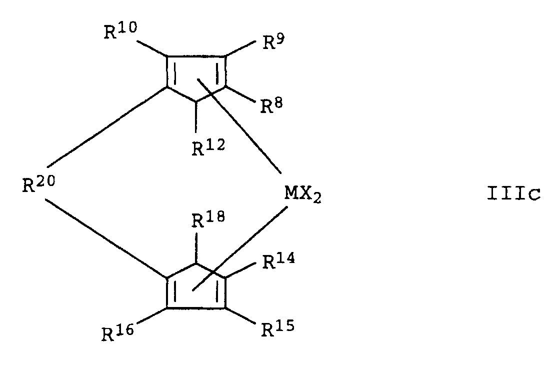 und 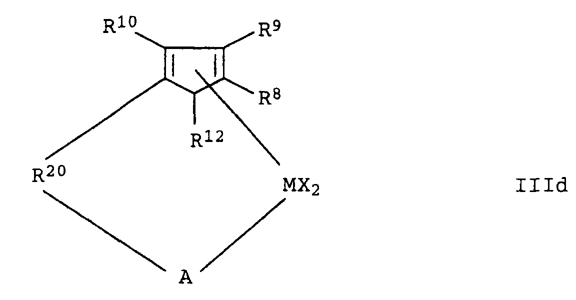 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium,
- X: Chlor und
- R⁸ bis R¹²: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: für Chlor,
- R⁸ bis R¹²: Wasserstoff, C₁- bis C₄-Alkyl oder Si(R¹³)₃,
- R¹⁴ bis R¹⁸: Wasserstoff, C₁- bis C₄-Alkyl oder Si(R¹⁹)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis (ethylcyclopentadienyl)-zirkoniumdichlorid,
Bis(n-butylcyclopentadienyl)-zirkoniumdichlorid und
Bis(trimethylsilylcyclopentadienyl) -zirkoniumdichlorid.

Von den Verbindungen der Formel IIIc sind diejenigen besonders geeignet, in denen
- R⁸ und R¹⁴: gleich sind und für Wasserstoff oder C₁- bis C₁₀-Alkylgruppen stehen,
- R¹² und R¹⁸: gleich sind und für Wasserstoff, eine Methyl-, Ethyl-, iso-Propyl- oder tert.-Butylgruppe stehen
- R⁹, R¹⁰, R¹⁵ und R¹⁶: die Bedeutung
R¹⁰ und R¹⁶ C₁- bis C₄-Alkyl
R⁹ und R¹⁵ Wasserstoff
haben oder zwei benachbarte Reste R⁹ und R¹⁰ sowie R¹⁵ und R¹⁶ gemeinsam für 4 bis 12 C-Atome aufweisende cyclische Gruppen stehen,
- R²⁰: für 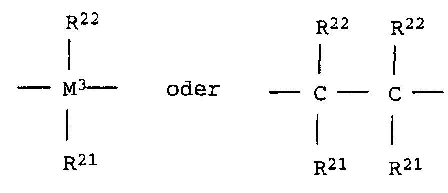 steht,
- M: für Titan, Zirkonium oder Hafnium und
- X: für Chlor stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis (tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)zirkoniumdichlorid,
Dimethylsilandiylbis (-3-tert.butyl-5-ethylcyclopentadienyl)zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis (-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)zirkoniumdichlorid,
Dimethylsilandiylbis(-3-ethyl-5-isopropylcyclopentadienyl)zirkoniumdichlorid,
Dimethylsilandiylbis (-2-methylindenyl)-zirkoniumdichlorid,
Dimethylsilandiylbis(-2-methylbenzindenyl)-zirkoniumdichlorid und
Dimethylsilandiylbis(-2-methylindenyl) -hafniumdichlorid.

Bei den Verbindungen der allgemeinen Formel IIId sind als besonders geeignet diejenigen zu nennen, in denen
- M: für Titan oder Zirkonium,
- X: für Chlor stehen,
- R²⁰: für 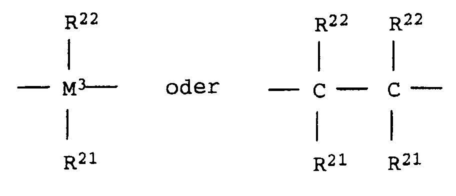 steht,
- A: für ―O―, ―S―, 〉NR²⁴
und
- R⁸ bis R¹⁰: und R¹² für Wasserstoff, C₁- bis C₁₀-Alkyl, C₃- bis C₁₀-Cycloalkyl, C₆- bis C₁₅-Aryl oder Si(R¹⁴)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M⁴X¹X²X³ IV

bevorzugt, in der
- M⁴: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das l,l'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex III.

Die Bedingungen für die Umsetzung des Metallocenkomplexes mit der metalloceniumionenbildenden Verbindung sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Hierzu wird nun das nach A) hergestellte Material gegeben. Eine Menge von 0,1 bis 10 Gew.-% an Metallocenkomplex, bezogen auf das anorganische Trägermaterial ist besonders geeignet. Die Bedingungen für diese Umsetzung sind ebenfalls nicht kritisch, Temperaturen im Bereich von 20 bis 80°C und Reaktionszeiten im Bereich von 0,1 bis 20 Stunden haben sich als besonders geeignet erwiesen.

Das nach B) erhaltene Material kann nun isoliert werden und ist bis zu mindestens 6 Monaten lagerbar.

In einer weiteren Stufe C), der Aktivierungsstufe, wird das nach B) erhaltene Material mit einer Metallverbindung der allgemeinen Formel II umgesetzt. Diese Aktivierung kann zu einem beliebigen Zeitpunkt, d.h. vor, bei oder nach der Dosierung des nach B) erhaltenen Materials in den Reaktor, erfolgen. Vorzugsweise erfolgt die Aktivierung nach der Dosierung des nach B) erhaltenen Materials in den Reaktor.

Von den Metallverbindungen der allgemeinen Formel II

M²(R⁵)ₒ(R⁶)ₚ(R⁷)_{q} II

in der
- M²: ein Alkali-, ein Erdalkalimetall oder ein Metall der III. Hauptgruppe des Periodensystems, d.h. Bor, Aluminium, Gallium, Indium oder Thallium bedeutet,
- R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- o: eine ganze Zahl von 1 bis 3
und
- p und q: ganze Zahlen von 0 bis 2 bedeuten, wobei die Summe o+p+q der Wertigkeit von M² entspricht,
sind diejenigen Verbindungen bevorzugt, in denen
- M²: Lithium, Magnesium oder Aluminium bedeutet und
- R⁵ bis R⁷: für C₁- bis C₁₀-Alkyl stehen.

Besonders bevorzugte Metallverbindungen der allgemeinen Formel II sind n-Butyl-Lithium, n-Butyl-n-octyl-Magnesium, n-Butyl-n-heptyl-Magnesium und Tri-n-hexyl-aluminium.

Die Bedingungen für die Umsetzung in Stufe C) sind an sich unkritisch. Temperaturen, Reaktionszeiten und Drücke richten sich nach dem Zeitpunkt der Umsetzung, d.h. Aktivierung.

Mit Hilfe dieser erfindungsgemäßen geträgerten Katalysatorsysteme lassen sich Polyolefine, insbesondere Polymerisate von Alk-1-enen herstellen. Darunter werden Homo- und Copolymerisate von C₂- bis C₁₀-Alk-1-enen verstanden, wobei als Monomere vorzugsweise Ethylen, Propylen, But-1-en, Pent-1-en und Hex-1-en verwendet werden.

Aber auch Cycloolefine oder höhere Alk-1-ene sowie generell Alkene lassen sich als Monomere zur Homo- oder Copolymerisation einsetzen.

Die erfindungsgemäßen geträgerten Katalysatorsysteme zeichnen sich insbesondere durch eine hohe Aktivität aus, sie sind zu einem beliebigen Zeitpunkt aktivierbar, können lange gelagert werden, sind nicht pyrophor und somit leicht handhabbar und führen zu Polymerisaten mit enger Molekulargewichtsverteilung.

### Beispiele

### Beispiele 1 und 2: Umsetzung von SiO₂ mit Aluminium-tri-iso-butyl (Stufe A))

### Beispiel 1

100 g SiO₂ (SG 332 der Fa. Grace; 12 Stunden bei 200°C getrocknet) wurden in 1 1 trockenem Heptan suspendiert. Bei Raumtemperatur wurden 140 ml einer 2-molaren Lösung von Aluminium-tri-iso-butyl in Heptan innerhalb von 30 Minuten zugetropft, wobei die Temperatur auf 35°C anstieg. Anschließend wurde über Nacht gerührt, der Feststoff abfiltriert und zweimal mit Pentan gewaschen. Dann wurde im Ölpumpenvakuum bis zur Gewichtskonstanz getrocknet (Träger 1).

### Beispiel 2

50 g SiO₂ (ES 70F der Fa. Crosfield; 7 Stunden bei 110°C im Vakuum getrocknet) wurden in 500 ml trockenem Heptan suspendiert. Bei Raumtemperatur wurden 70 ml einer 2-molaren Lösung von Aluminium-tri-iso-butyl in Heptan innerhalb von 30 Minuten zugetropft, wobei die Temperatur auf 35°C anstieg. Anschließend wurde über Nacht gerührt, der Feststoff abfiltriert und mit Heptan gewaschen. Dann wurde im Ölpumpenvakuum bis zur Gewichtskonstanz getrocknet (Träger 2).

### Beispiel 3 Umsetzung mit Metallocenkomplex und N,N-Dimethylanilinium-tetrakis(pentafluorphenyl)borat (Stufe B))

0,5 mmol des jeweiligen Metallocenkomplexes und jeweils 0,5 mmol N,N-Dimethylanilinium-tetrakis(pentafluorphenyl)borat wurden in 50 ml absolutem Toluol bei 80°C gelöst. Hierzu wurden jeweils 5 g des nach Beispiel 1 oder 2 erhaltenen Materials gegeben und die so erhaltene Dispersion 30 Minuten bei 80°C gerührt. Danach wurde das Lösungsmittel bei 10 mbar abgezogen und der feste Rückstand im Ölpumpenvakuum getrocknet, bis ein gut rieselfähiges Pulver zurückblieb.

Eingesetzte Metallocenkomplexe:
- III 1:: Bis (cyclopentadienyl)zirkoniumdichlorid
- III 2:: Bis (n-butylcyclopentadienyl)zirkoniumdichlorid
- III 3:: Bis (trimethylsilylcyclopentadienyl)zirkoniumdichlorid
- III 4:: Dimethylsilandiylbis(indenyl)zirkoniumdichlorid
- III 5:: Ethylenbis(indenyl)zirkoniumdichlorid
- III 6:: Dimethylsilandiylbis(-2-methylbenzindenyl)zirkoniumdichlorid
- III 7:: Dimethylsilandiyl(N-tert. -butylamido) (η⁵-2,3,4,5-tetramethylcyclopentadienyl)titandichlorid

### Beispiele 4 bis 17: Herstellung von Polyethylen in Suspension

Ein 1 1-Stahlautoklav wurde auf 70°C aufgeheizt, dann wurde die entsprechende Metallverbindung II durch eine Schleuse mit 20 ml i-Butan eingespritzt. Anschließend wurde Ethylen bis zu einem Druck von 40 bar in den Autoklav eingeleitet und eine entsprechende Menge des in Beispiel 3 hergestellten Materials mit Ethylen eingeblasen. Die Polymerisation wurde bei 70°C durchgeführt, bis 200 g Ethylen aufgenommen waren und durch Entspannen abgebrochen.

Eingesetzte Metallverbindungen II:
- II 1:: Tri-n-hexyl-aluminium
- II 2:: n-Butyl-n-Heptyl-Magnesium
- II 3:: n-Butyl-Lithium

Über die jeweils eingesetzten Verbindungen und die Eigenschaften der Polyethylene gibt die nachfolgende Tabelle 1 Auskunft.

Die Grenzviskosität η wurde nach ISO 1628/3 bestimmt.

**Tabelle 1:**

| Bsp. | Träger | Metallocenkomplex | eingesetzte Menge des nach Bsp.3 hergest. Materials [mg] | Metallverbindung | Produktivität [g Polymer/g Katalysator]^{*)} | η [dl/g] |
|---|---|---|---|---|---|---|
| 4 | 1 | III 1 | 107 | 180 mg II 1 | 1495 | 3,75 |
| 5 | 2 | III 1 | 68 | 168 mg II 1 | 3970 | 4,04 |
| 6 | 2 | III 1 | 88 | 80 mg II 2 | 3460 | 4,06 |
| 7 | 1 | III 2 | 66 | 40 mg II 3 | 2560 | 3,97 |
| 8 | 2 | III 2 | 98 | 80 mg II 2 | 3010 | 4,24 |
| 9 | 2 | III 2 | 54 | 40 mg II 3 | 4900 | 4,05 |
| 10 | 1 | III 3 | 83 | 80 mg II 3 | 228 | 6,34 |
| 11 | 1 | III 4 | 116 | 20 mg II 3 | 1422 | 2,43 |
| 12 | 2 | III 4 | 41 | 60 mg II 2 | 4580 | 2,89 |
| 13 | 2 | III 6 | 94 | 80 mg II 2 | 2660 | 2,11 |
| 14 | 1 | III 7 | 140 | 60 mg II 2 | 2210 | 24,8 |
| 15 | 1 | III 7 | 81 | 20 mg II 3 | 2690 | 22,89 |
| 16 | 1 | III 7 | 250 | 40 mg II 3 | 506 | 21,2 |
| 17 | 1 | III 7 | 197 | 80 mg II 2 | 535 | 20,22 |

| | | | | | | |
|---|---|---|---|---|---|---|
| ^{*)} Katalysator bedeutet das nach Stufe B) erhaltene Produkt | | | | | | |

### Beispiele 18 bis 21: Herstellung von Polyethylen in der Gasphase

Ein 1 1-Stahlautoklav wurde mit 80 g Polyethylengrieß gefüllt, auf 70°C aufgeheizt und 1 Stunde mit Argon gespült. Dann wurden 3 ml einer 0,2-molaren Lösung von Tri-n-hexyl-aluminium in Heptan eingespritzt. Anschließend wurden jeweils 50 mg des in Beispiel 3 hergestellten Materials mit Ethylen eingeblasen und der Ethylendruck auf 40 bar erhöht. Die Polymerisation wurde bei 70°C durchgeführt bis 150 g Ethylen aufgenommen waren und durch Entspannen abgebrochen.

Über die eingesetzten Verbindungen und die Eigenschaften der Polyethylene gibt die nachfolgende Tabelle 2 Auskunft.

Die Grenzviskosität η wurde ebenfalls nach ISO 1628/3 bestimmt.

**Tabelle 2:**

| Bsp. | Träger | Metallocenkomplex | Produktivität [g Polymer/ g Katalysator] ^{*)} | η [dl/g] |
|---|---|---|---|---|
| 18 | 1 | III 2 | 1604 | 4,52 |
| 19 | 1 | III 4 | 3290 | 2,23 |
| 20 | 1 | III 5 | 2256 | 1,54 |
| 21 | 1 | III 7 | 1306 | 13,9 |

| | | | | |
|---|---|---|---|---|
| ^{*)} Katalysator bedeutet das nach Stufe B) erhaltene Produkt | | | | |

### Beispiel 22: Herstellung von Polypropylen (Bulk-Polymerisation)

In einem mit Stickstoff gespülten 11-Stahlautoklav wurden 0,3 1 flüssiges Propen bei Raumtemperatur vorgelegt. Über eine Schleuse wurden 1 mmol Tri-iso-butyl-aluminium (als 2-molare Lösung in Heptan) zugegeben. Nach 5minütigem Rühren wurden ebenfalls über die Schleuse 72 mg des in Beispiel 3 hergestellten Materials (Träger 1, Metallocenkomplex III6) zugegeben und der Autoklav auf 60°C aufgeheizt. Die Polymerisation wurde bei 70°C über einen Zeitraum von 10 Minuten durchgeführt. Man erhielt 90 g isotaktisches Polypropylen mit einem Schmelzpunkt von 144,9°C.

## Patentansprüche

1. Geträgerte Katalysatorsysteme, erhältlich durch
A) Umsetzung eines anorganischen Trägermaterials, welches ein feinteiliger Feststoffist, dessen Teilchen durchmesser im Bereich von 1 bis 200 µm liegen, mit einer Metallverbindung der allgemeinen Formel I
M¹(R¹)ᵣ(R²)ₛ(R³)ₜ(R⁴)ᵤ I
in der
M¹ ein Alkali-, ein Erdalkalimetall oder ein Metall der III. oder IV. Hauptgruppe des Periodensystems bedeutet,
R¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R² bis R⁴ Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
r eine ganze Zahl von 1 bis 4
und
s, t und u ganze Zahlen von 0 bis 3 bedeuten, wobei die Summe r+s+t+u der Wertigkeit von M¹ entspricht,
B) Umsetzung des nach A) erhaltenen Materials mit dem Umsetzungsprodukt aus mindestens einem Metallocenkomplex in seiner Metalldihalogenid-Form und einer metalloceniumionenbildenden Verbindung
und
C) anschließender Umsetzung mit einer Metallverbindung der allgemeinen Formel II
M²(R⁵)ₒ(R⁶)ₚ(R⁷)_{q} II
in der
M² ein Alkali-, ein Erdalkalimetall oder ein Metall der III. Hauptgruppe des Periodensystems bedeutet,
R⁵ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R⁶ und R⁷ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
o eine ganze Zahl von 1 bis 3
und
p und q ganze Zahlen von 0 bis 2 bedeuten, wobei die Summe o+p+q der Wertigkeit von M² entspricht.

2. Geträgerte Katalysatorsysteme nach Anspruch 1, dadurch gekennzeichnet, daß das nach A) erhaltene Material isoliert und getrocknet wird.

3. Geträgerte Katalysatorsysteme nach den Ansprüchen 1 bis 2, dadurch gekennzeichnet, daß in der allgemeinen Formel I M¹ für Aluminium, die Reste R¹ bis R³ für C₁- bis C₁₀-Alkyl und u für Null stehen.

4. Geträgerte Katalysatorsysteme nach den Ansprüchen 1 bis 3, dadurch gekennzeichnet, daß als metalloceniumionenbildende Verbindung eine Koordinationskomplexverbindung ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

5. Geträgerte Katalysatorsysteme nach den Ansprüchen 1 bis 4, dadurch gekennzeichnet, daß in der allgemeinen Formel II die Reste R⁵ bis R⁷ für C₁- bis C₁₀-Alkyl stehen.

6. Verfahren zur Herstellung von geträgerten Katalysatorsystemen gemäß den Verfahrensbedingungen von Anspruch 1.

7. Verwendung von geträgerten Katalysatorsystemen gemäß den Ansprüchen 1 bis 5 zur Herstellung von Polyolefinen.

## Claims

1. A supported catalyst system obtainable by
A) reaction of an inorganic carrier, which is a finely divided solid whose particle diameter is from 1 to 200 µm, with a metal compound of the formula I
M¹(R¹)ᵣ(R²)ₛ(R³)ₜ(R⁴)ᵤ I
where
M¹ is an alkali metal, an alkaline earth metal or a metal of main group III or IV of the Periodic Table,
R¹ is hydrogen, C₁-C₁₀-alkyl, C₆-C₁₅-aryl, alkylaryl or arylalkyl each having 1 to 10 carbon atoms in the alkyl radical and 6 to 20 carbon atoms in the aryl radical,
R² to R⁴ are each hydrogen, halogen, C₁-C₁₀-alkyl, C₆-C₁₅-aryl, alkylaryl, arylalkyl, alkoxy or dialkyl-amino each having 1 to 10 carbon atoms in the alkyl radical and 6 to 20 carbon atoms in the aryl radical,
r is an integer from 1 to 4
and
s, t and u are integers from 0 to 3 the sum r+s+t+u corresponding to the valency of M¹,
B) reaction of the material obtained according to A) with the reaction product from at least one metallocene complex in its metal dihalide form and one compound forming metallocenium ions
and
C) subsequent reaction with a metal compound of the formula II
M²(R⁵)ₒ(R⁶)ₚ(R⁷)_{q} II
where
M² is an alkali metal, an alkaline earth metal or a metal of main group III of the Periodic Table,
R⁵ is hydrogen, C₁-C₁₀-alkyl, C₆-C₁₅-aryl, alkylaryl or arylalkyl each having 1 to 10 carbon atoms in the alkyl radical and 6 to 20 carbon atoms in the aryl radical,
R⁶ and R⁷ are each hydrogen, halogen, C₁-C₁₀-alkyl, C₆-C₁₅-aryl, alkylaryl, arylalkyl or alkoxy each having 1 to 10 carbon atoms in the alkyl radical and 6 to 20 carbon atoms in the aryl radical,
o is an integer from 1 to 3
and
p and q are integers from 0 to 2 the sum o+p+q corresponding to the valency of M².

2. A supported catalyst system as claimed in claim 1, wherein the material obtained according to A) is isolated and dried.

3. A supported catalyst system as claimed in claims 1 and 2, wherein, in the formula I, M¹ is aluminum, R¹ to R³ are each C₁-C₁₀-alkyl and u is zero.

4. A supported catalyst system as claimed in any of claims 1 to 3, wherein a coordination complex compound selected from the group consisting of the strong, neutral Lewis acids, the ionic compounds having Lewis acid cations and the ionic compounds having Brönsted acids as cation is used as the compound forming metallocenium ions.

5. A supported catalyst system as claimed in any of claims 1 to 4, wherein, in the formula II, R⁵ to R⁷ are each C₁-C₁₀-alkyl.

6. A process for the preparation of supported catalyst systems under the process conditions of claim 1.

7. The use of supported catalyst systems as claimed in any of claims 1 to 5 for the preparation of polyolefins.

## Revendications

1. Systèmes catalytiques sur support, que l'on peut obtenir par
A) réaction d'une matière de support inorganique qui est une matière solide finement divisée, dont les diamètres de particules sont de l'ordre de 1 à 200 µm, avec un composé métallique de la formule générale I :
M¹(R¹)ᵣ(R²)ₛ(R³)ₜ(R⁴)ᵤ I
dans laquelle
M¹ représente un métal alcalin, un métal alcalino-terreux ou un métal du groupe principal III ou IV du système périodique,
R¹ représente de l'hydrogène ou un groupe alkyle en C₁-C₁₀, aryle en C₆-C₁₅, alkylaryle ou arylalkyle, avec chaque fois 1 à 10 atomes de C dans le radical alkyle et 6 à 20 atomes de C dans le radical aryle,
R² à R⁴ représentent de l'hydrogène, un halogène, ou un groupe alkyle en C₁-C₁₀, aryle en C₆-C₁₅, alkylaryle, arylalkyle, alcoxy ou dialkylamino, avec chaque fois 1 à 10 atomes de C dans le radical alkyle et 6 à 20 atomes de C dans le radical aryle,
r est un nombre entier de 1 à 4, et
s, t et u représentent des nombres entiers de 0 à 3, la somme de r+s+t+u correspondant à la valence de M¹,
B) réaction de la matière obtenue selon A) avec le produit de réaction d'au moins un complexe de métallocène sous sa forme de dihalogénure métallique et d'un composé générateur d'ions métallocénium,
et
C) réaction ultérieure avec un composé métallique de la formule générale II :
M²(R⁵)ₒ(R⁶)ₚ(R⁷)_{q} II
dans laquelle
M² représente un métal alcalin, un métal alcalino-terreux ou un métal du groupe principal III du système périodique,
R⁵ représente de l'hydrogène ou un groupe alkyle en C₁-C₁₀, aryle en C₆-C₁₅, alkylaryle ou arylalkyle, avec chaque fois 1 à 10 atomes de C dans le radical alkyle et 6 à 20 atomes de C dans le radical aryle,
R⁶ et R⁷ représentent de l'hydrogène, de l'halogène, ou un groupe alkyle en C₁-C₁₀, aryle en C₆-C₁₅, alkylaryle, arylalkyle ou alcoxy, avec chaque fois 1 à 10 atomes de C dans le radical alkyle et 6 à 20 atomes de C dans le radical aryle,
o est un nombre entier de 1 à 3, et
p et q représentent des nombres entiers de 0 à 2, la somme de o+p+q correspondant à la valence de M².

2. Systèmes catalytiques sur support suivant la revendication 1, caractérisés en ce que la matière obtenue selon A) est isolée et séchée.

3. Systèmes catalytiques sur support suivant l'une des revendications 1 et 2, caractérisés en ce que, dans la formule générale I, M¹ représente de l'aluminium et les radicaux R¹ à R³ un groupe alkyle en C₁ à C₁₀, et u est égal à zéro.

4. Systèmes catalytiques sur support suivant l'une des revendications 1 à 3, caractérisés en ce que, comme composé générateur d'ions métallocénium, on met en oeuvre un composé complexe de coordination choisi parmi le groupe des acides de Lewis neutres, forts, des composés ioniques avec des cations d'acide de Lewis et des composés ioniques avec des acides de Brönsted comme cations.

5. Systèmes catalytiques sur support suivant l'une des revendications 1 à 4, caractérisés en ce que, dans la formule générale II, les radicaux R⁵ à R⁷ représentent un groupe alkyle en C₁-C₁₀.

6. Procédé de préparation de systèmes catalytiques sur support conformément aux conditions opératoires de la revendication 1.

7. Utilisation de systèmes catalytiques sur support suivant les revendications 1 à 5, pour la préparation de polyoléfines.
